# EUROPÄISCHE PATENTSCHRIFT

(11) **EP 0 386 288 B1**
(45) Veröffentlichungstag und Bekanntmachung des Hinweises auf die Patenterteilung: **15.12.1993**
(21) Anmeldenummer: 89104019.8
(22) Anmeldetag: 07.03.1989
(51) Int. Cl.: H02H 3/04

(54) **Einrichtung zur Überwachung von elektronischen Schaltungen oder von Bauelementen**
Device for monitoring electronic circuits or components
Dispositif de surveillance pour circuits électroniques ou pièces

(43) Veröffentlichungstag der Anmeldung: 12.09.1990
(73) Patentinhaber: SIEMENS AKTIENGESELLSCHAFT, 80333 München (DE)
(72) Erfinder: Harr, Dieter, Dipl.-Ing., D-8400 Regensburg (DE); Lehner, Gerald, Dipl.-Ing. (FH), D-8400 Regensburg (DE)

(56) Entgegenhaltungen:
- EP-A- 0 173 018
- CH-A- 258 694
- CH-A- 463 609
- CH-A- 669 072
- DE-A- 3 029 453
- US-A- 4 088 986

## Beschreibung

Die Erfindung bezieht sich auf eine Einrichtung zur Überwachung von elektronischen Schaltungen oder von Bauelementen, die einen Ruhestrom aufweisen, auf Funktionstüchtigkeit.

Bei Überspannungsableitern, die hier als Bauelemente mit einem Ruhestrom zu verstehen sind, ist es üblich, die eingesetzten Varistoren darauf zu überwachen, ob der Ruhestrom bzw. Leckstrom längerfristig ansteigt, was ein Anzeichen dafür ist, daß ein Varistor schadhaft wird (DE-A-35 22 260, EP-A-0 173 018, EP-A-0 173 017, DE-A-35 45 526, DE-A-35 45 520, DE-A-35 45 519, DE-A-30 29 453). Derartig ansteigende Ruheströme bzw. Leckströme führen zu vielfältigen unangenehmen Folgen und zu verschleppten Spannungen an anderen Stellen der Schaltung. Man sieht daher Abschaltvorrichtungen vor, um schadhaft gewordene Überspannungsableiter zu trennen, wodurch sie allerdings funktionslos werden und auszuwechseln sind.

Varistoren und andere Bauelemente, die Ruheströme aufweisen, können auch in anderer Weise schadhaft werden, so daß der Strompfad unterbrochen wird. Varistoren können beispielsweise durch Alterung oder Überlastung zerstört werden.

Der Erfindung liegt die Aufgabe zugrunde, allgemein elektronische Schaltungen und Schaltungsglieder wie auch Bauelemente, die einen Ruhestrom aufweisen, auf Funktionstüchtigkeit derart zu überprüfen, ob die Schaltung oder das Bauelement eine Strompfadunterbrechung erleidet.

Die Lösung der geschilderten Aufgabe besteht nach der Erfindung in einer Einrichtung nach Patentanspruch 1. Zumindest in einem Außenleiteranschluß der Schaltung bzw. des Bauelements ist ein Stromsensor eingeschaltet, der mit einer Auswertungsschaltung verbunden ist, die auf Unterschreiten eines unterhalb des normalen Ruhestroms bzw. Leckstroms angesetzten Schwellenwerts ein Auswertungssignal abgibt, das an einem Ausgang als Meldesignal zur verfügung steht. Die zu überwachenden Außenleiteranschlüsse sind jeweils durch einen Ringkern aus magnetisch leitendem Material hindurchgeführt, wobei jeweils eine Sekundärwicklung des Ringkerns mit der Auswertungsschaltung verbunden ist. In dieser Schaltung ist eine logische Verknüpfung untergebracht. Das Abfallen des Ruhestroms oder seine Unterbrechung wird also für die Überwachung herangezogen.

Es ist eine Überwachungseinrichtung bekannt (CH-A-463 609), die Ruhe- und Leckströme bei Überspannungsableitern überwacht und die Entladungen zählt. Die Strommessung erfolgt hierbei an einem nichtlinearen Shunt potentialbehaftet. Es fehlt auch eine Überwachung auf Unterschreiten eines unterhalb des normalen Ruhestroms angesetzten Schwellwerts.

Bei der Einrichtung zur Überwachung von elektronischen Schaltungen kann das Meldesignal auch zur Fernüberwachung herangezogen werden oder es läßt sich für Schalthandlungen nutzen.

Wenn mehrere elektronische Schaltungen oder mehrere Bauelemente zu überwachen sind, ist es vorteilhaft, zwischen den Sensoren und dem Ausgang für das Meldesignal eine Schaltung für logische Verknüpfung einzuschalten. Diese kann im einfachsten Fall eine UND-Schaltung sein. Sie kann auch verständlicherweise als NAND-Schaltung realisiert werden. Bei Ausfall eines der überwachten Geräte bzw. Bauelemente wird dann ein Meldesignal abgegeben, so daß sich die Übertragungswege für Meldesignale verringern.

Eine derartige Einrichtung kann vorteilhaft zur Überwachung von Überspannungsableitern auf Unterbrechen des Strompfades infolge eines Defektes herangezogen werden.

Bei einem zu überwachenden Außenleiteranschluß ist es vorteilhaft, diesen durch einen Ringkern aus magnetisch leitendem Material hindurchzuführen und eine Sekundärwicklung des Ringkerns einerseits mit der Auswertungsschaltung zu verbinden und andererseits, eventuell auch mit einer weiteren Sekundärwicklung, mit einer Abschalteinrichtung zu verbinden, die auf Überschreiten eines Schwellwerts oberhalb des normalen Ruhestroms anspricht. Eine derartige Einrichtung überwacht umfassend, also auf Unterschreiten eines Leckstroms sowie auf Überschreiten. Eine erfindungsgemäße Einrichtung der zuvor beschriebenen Art ist danach mit einer bekannten, eingangs aufgeführten Abschalteinrichtung zu einem wirtschaftlichen Überwachungsgerät kombiniert. Eine derartige Überwachungseinrichtung ist als umfassende Überwachungseinrichtung für einen Überspannungsschutz besonders vorteilhaft.

Die Erfindung soll nun anhand von in der Zeichnung grob schematisch wiedergegebenen Ausführungsbeispielen näher erläutert werden:
In FIG 1 ist eine Anordnung zur Überwachung mehrerer Bauelemente, im Ausführungsbeispiel mehrere als Überspannungsableiter dienende Varistoren, veranschaulicht.
In FIG 2 ist ein Blockschaltbild für die Einrichtung zur Überwachung wiedergegeben.
In FIG 3 ist ein Ausführungsbeispiel für eine Auswertungseinheit des Blockschaltbilds nach FIG 2 dargestellt.
In FIG 4 ist ein anderes Ausführungsbeispiel für eine Auswertungseinheit wiedergegeben.
In FIG 5 ist eine umfassende Überwachungseinrichtung für ein einzelnes Bauelement dargestellt.
In FIG 6 ist ein anderes Ausführungsbeispiel für eine Einrichtung zur umfassenden Überwachung eines einzelnen Bauelements wiedergegeben.

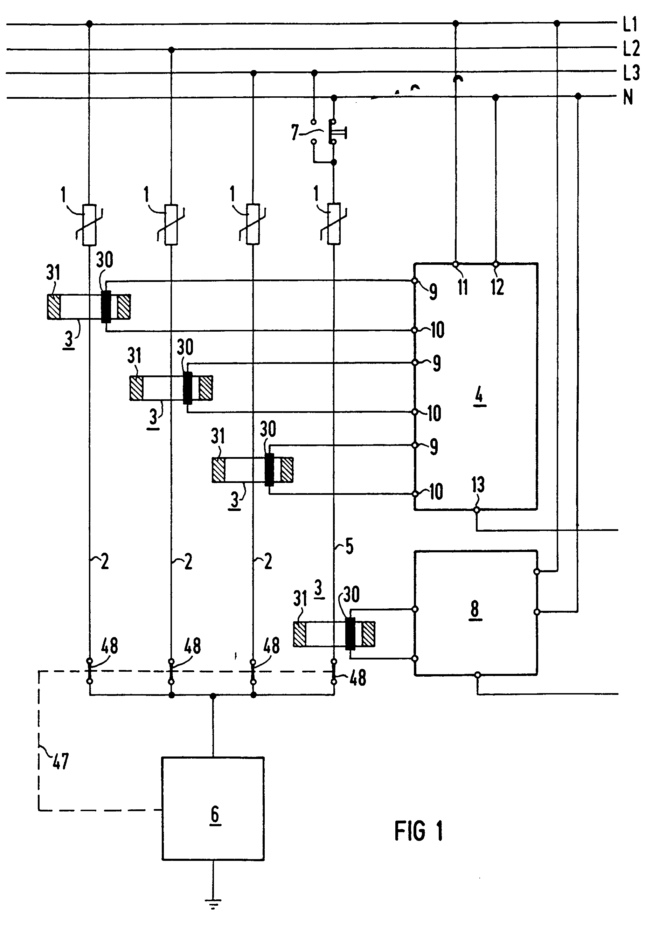

Die Einrichtung zur Überwachung von elektronischen Schaltungen oder von Bauelementen 1 nach FIG 1 besteht aus Stromsensoren 3, die jeweils in einen Außenleiteranschluß 2 eingeschaltet sind, und aus einer Auswertungsschaltung 4. Die Außenleiter 2 bzw. die Phasenleiter, sind mit den Netzleitern L1 bis L3 verbunden. Der Mittelleiteranschluß 5 ist mit dem entsprechenden Netzleiter N, bzw. dem Neutralleiter, verbunden. Die Einrichtung nach FIG 1 kann als Überwachungseinrichtung für eine elektrische Installationsanlage mit Überspannungsschutz verstanden werden. Die Bauelemente 1 können entsprechend als Varistoren zum Ableiten von Überspannungen verstanden werden. Um bei einer derartigen Anlage einen umfassenden Schutz zu erzielen, können die Bauelemente 1 durch eine gemeinsame Abschalteinrichtung 6 geschützt sein, die bei längerfristiger Überschreitung der Ruheströme über die Wirkverbindung 47 die Kontakte 48 öffnet und dadurch die Bauelemente abschaltet.

Der Mittelleiteranschluß 5 führt in einer Installationsanlage mit Überspannungsschutz im Regelfall keinen Ruhestrom, wenn der Mittelleiter spannungslos ist. Es ist daher vorteilhaft, eine Prüfeinrichtung 7 vorzusehen, die das Bauelement 1 während der Prüfung an Spannung legt, so daß ein Stromsensor 3, durch den der Mittelleiteranschluß 5 geführt ist, ein Signal an eine Auswertungseinheit 8 abgeben kann, die feststellt, ob der Ruhestrom im normalen Bereich liegt. Die Eingänge 9, 10 der Auswertungsschaltung 4 sind mit den Stromsensoren 3 verbunden. Das Bordnetz der Auswertungsschaltung 4 ist über die Anschlüsse 11 und 12 versorgt. Ein Meldesignal steht am Ausgang 13 zur Verfügung.

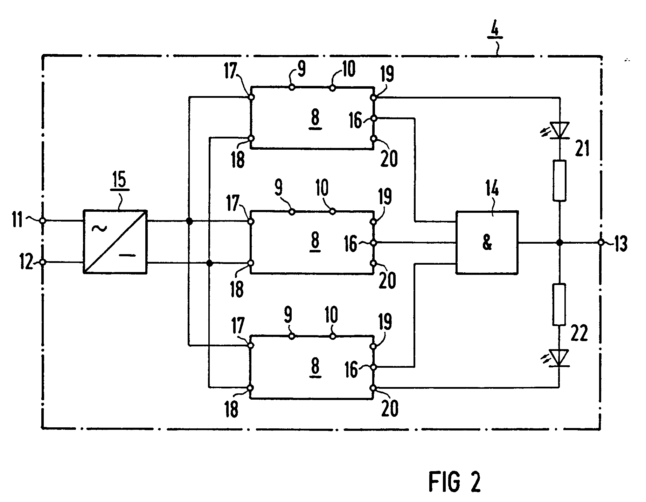

Bei mehreren zu überwachenden Bauelementen 1 ist es vorteilhaft, zwischen den Sensoren und dem Ausgang für das Meldesignal eine Schaltung für logische Verknüpfung, beispielsweise nach FIG 2 vorzusehen. Die Schaltung 14 für logische Verknüpfung ist im Ausführungsbeispiel als UND-Schaltung realisiert. Die Ausgänge 16 für ein Auswertungssignal der Auswertungseinheiten 8 sind Eingängen der Schaltung 14 für logische Verknüpfung, der UND-Schaltung, zugeführt. An ihrem Ausgang 13 steht ein Meldesignal an, wenn eine der Auswertungseinheiten 8 feststellt, daß an ihren Eingängen 9 und 10 das von einem Stromsensor 3 abgegebene Signal einen eingestellten Schwellwert unterschreitet. Die an den Anschlüssen 11 und 12 zugeführte Spannung für das Bordnetz führen zu einem Netzteil 15 für Gleichspannungsversorgung. Die Auswertungseinheiten 8 werden vom Netzteil an den Anschlüssen 17 und 18 versorgt. Zusatzausgänge 19 bzw. 20 der Auswertungseinheiten 8 ermöglichen es, Signalanzeiger 21 bzw. 22 anzuschließen. Der Signalanzeiger 21, beispielsweise eine rote Leuchtdiode, wird mit Spannung zwischen dem Ausgang 13 für das Meldesignal und dem Zusatzausgang 19 einer Auswertungseinheit 8 versorgt, wenn am Ausgang 13 für das Meldesignal angezeigt wird, daß eine der Auswertungseinheiten 8 ein Unterschreiten des eingestellten Schwellwerts festgestellt hat. Der Signalanzeiger 22, beispielsweise eine grüne Leuchtdiode, wird dagegen mit Spannung zwischen dem Ausgang 13 für das Meldesignal und dem Zusatzausgang 20 einer Auswertungseinheit 8 versorgt, wenn alle Auswertungseinheiten 8 festgestellt haben, daß der eingestellte Schwellwert nicht unterschritten wird.

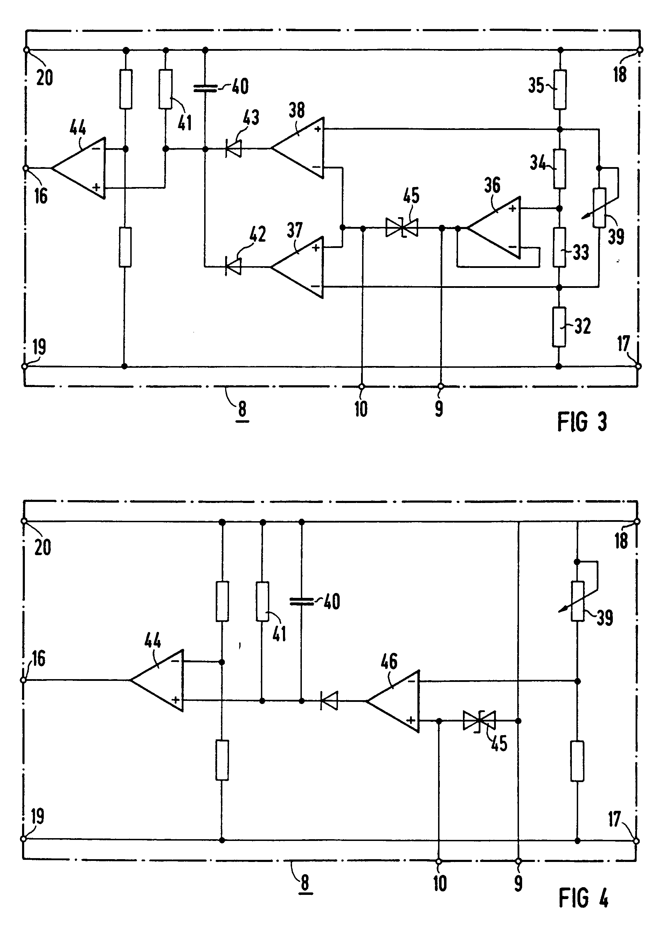

In FIG 3 ist eine Auswertungseinheit 8 anhand eines Ausführungsbeispiels veranschaulicht. Sie wird an den Anschlüssen 17 und 18 vom Netzteil mit Gleichspannung versorgt. Ihre Eingänge 9 und 10 sind mit einem Stromsensor 3 nach FIG 1 verbunden. Im Ausführungsbeispiel nach FIG 1 sind als Stromsensoren Ringkerne aus magnetischem Material verwandt, durch die jeweils ein zu überwachender Leiter durchgeführt ist. Eine Sekundärwicklung 30 nimmt ein induziertes Signal ab und führt es den Eingängen 9 und 10 der zugeordneten Auswertungseinheit 8 zu. Spannungsteilerwiderstände 32 bis 35 legen das Potential von Ein- und Ausgang des als Spannungsfolger geschalteten Operationsverstärkers 36 auf halbe Versorgungsspannung. Hierzu sind die Spannungsteilerwiderstände 32 und 35 sowie 33 und 34 mit gleichem Widerstand gewählt. Wird den Eingängen 9 und 10 einer Auswertungseinheit 8 bzw. der Auswertungsschaltung 4 nach FIG 1 eine Wechselspannung vom Stromsensor 3 zugeführt, nehmen die Ausgänge der Operationsverstärker 37 und 38 wechselweise Plus-Potential an. Hierbei kann mit Hilfe des Potentiometers 39 eine Schaltschwelle eingestellt werden. Die von den Operationsverstärkern 37 und 38 erzeugte pulsierende Gleichspannung wird vom Glättungskondensator 40 geglättet. Der Widerstand 41 dient als Entladewiderstand des Glättungskondensators. Die Dioden 42 und 43 verhindern einen Rückstrom über die Operationsverstärker 37 und 38, wenn deren Ausgänge jeweils niedrigeres Potential als der Anschluß des Glättungskondensators 40 aufweisen. Die am Glättungskondensator 40 anstehende Spannung schaltet den Operationsverstärker 44 um, wodurch sein Ausgang, der auch der Ausgang für das Auswertungssignal ist, Plus-Potential annimmt.

Der Spannungsabfall an den vergleichsweise niederohmigen Widerständen 33 und 34 ist größer einzustellen als die Offset-Spannung der Operationsverstärker 37 und 38, um deren Ausgänge bei fehlender Spannung an den Eingängen 9 und 10, also bei fehlendem Signal vom Stromsensor 3 bei Unterbrechung des von diesem überwachten Strompfades, auf Null-Potential zu legen. Dann liegt auch der Ausgang 16 des Operationsverstärkers 44 auf Null-Potential.

Der Aufbau der Auswertungseinheit 8 nach FIG 4 ist einfacher als der nach FIG 3 und entspricht in etwa einer halben Schaltung nach FIG 3. Es wird hierbei nur eine Halbwelle des vom Stromsensor 3 gelieferten Signals ausgewertet. Es ist dabei in Kauf zu nehmen, daß die Empfindlichkeit dieser Schaltung entsprechend geringer ist. Diesen Nachteil kann man bei Ringkernwandlern als Stromsensoren 3 durch entsprechende Bemessung der Wandler weitgehend kompensieren. Es bleibt dann der Vorteil der einfacheren Schaltung. Die Auswertungseinheit 8 nach FIG 3 wie auch nach FIG 4 weist jeweils ein spannungsbegrenzendes Bauteil 45 auf, zum Beispiel eine Transildiode, einen Varistor oder Zenerdioden. Dieses spannungsbegrenzende Bauteil ist parallel zur Sekundärwicklung eines als Ringkernwandler ausgeführten Stromsensors 3 geschaltet. Die Auswertungseinheit 8 ist dadurch gegen Überspannung geschützt. Je nach Bemessung des Wandlers und der Operationsverstärker kann als Überspannungsschutz für die Eingänge der Operationsverstärker ein Varistor genügen. Man kann auch einen gestaffelten Schutz aus einem Varistor gegen langsame energiereiche Spannungsspitzen in Verbindung mit einer Transildiode oder Zenerdioden zum Schutz gegen die beim Varistorschutz übrig bleibenden schnellen energieärmeren Spannungsspitzen vorsehen. Der Überspannungsschutz ist hierbei so zu bemessen, daß die zulässige Eingangsspannung der Operationsverstärker 37 und 38 bzw. der Operationsverstärker 46 nach FIG 4 beim maximal zu erwartenden Varistorstoßstrom auch dynamisch nicht überschritten wird.

Bei einem als Ringkernwandler ausgeführten Stromsensor 3, wie es in FIG 1 veranschaulicht ist, ist es günstig, das Übersetzungsverhältnis aus Sekundärwindungen zu Primärwindungen möglichst hoch zu wählen. Hierdurch wird sichergestellt, daß der Ruhestrom des zu überwachenden Bauelements 1 eine ausreichend hohe Sekundärspannung induziert, um die Elektronik der Auswertungsschaltung 4 bzw. jeweils einer Auswertungseinheit 8 ansteuern zu können. Außerdem wird hierdurch ein durch die Primärwicklung fließender Stoßstrom in der Sekundärwicklung entsprechend heruntertransformiert, wodurch die Beanspruchung durch Stoßstrom in dem zur Spannungsbegrenzung der Elektronik eingesetzten Bauteile entsprechend vermindert wird.

Wenn die Überwachungseinrichtung in einer Installationsanlage mit Überspannungsschutz nach FIG 1 eingesetzt ist, kann der Mittelleiteranschluß 5 darauf überprüft werden, ob das an sich nicht stromführende Bauelement 1 intakt ist, wenn eine Prüfeinrichtung 7 vorgesehen ist. Das Bauelement 1 , beispielsweise ein Varistor, kann durch Betätigen des Tasters der Prüfeinrichtung 7 dann vorübergehend an Spannung gelegt werden, so daß durch eine Auswertungseinheit 8 festgestellt werden kann, ob das Bauelement 1 in Orndung, also leitend ist. Die Einrichtung dient dann also zur Überwachung von Überspannungsableitern auf Unterbrechen des Strompfades infolge eines Defektes.

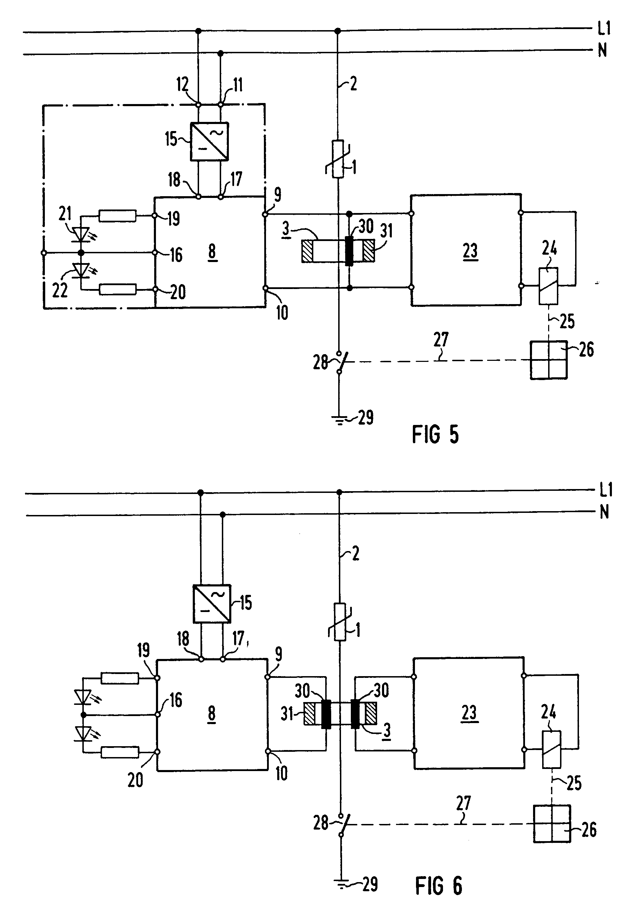

Die umfassende Überwachungseinrichtung für ein als Überspannungsableiter zu verstehendes Bauelement 1 wird im Ausführungsbeispiel nach FIG 5 bei einem Außenleiteranschluß 2 veranschaulicht. Eine Abschalteinheit 23, ist an der Sekundärwicklung eines als Ringkernwandlers ausgeführten Stromsensors 3 ebenso angeschlossen wie die Eingänge 9 und 10 der Auswertungseinheit 8. Wenn ein zum Ruhestrom eingestellter oberer Schwellwert längerfristig überschritten wird, führt die Abschalteinheit 23 einem Auslöserelais 24 ein Auslösesignal zu. Über eine Wirkverbindung 25 wird das Schaltschloß 26 dann entklinkt, so daß dieses über eine Wirkverbindung 27 einen Schaltkontakt 28 im Außenleiteranschluß 2 zur Erde 29 öffnet. Der Ringkernwandler 31 des Stromsensors 3 kann anstelle einer Sekundärwicklung 30 verständlicherweise auch zwei Sekundärwicklungen 30 nach FIG 6 aufweisen, wodurch der Stromsensor 3 individueller an die Auswertungseinheit 8 und an die Abschalteinheit 23 angepaßt werden kann. Die Schaltungsanordnung zum Abschalten mit der Abschalteinheit 23 kann in an sich bekannter Weise, entsprechend DE-OS 35 45 526, DE-OS 35 45 520, DE-OS 35 45 519, DE-OS 34 31 464, DE-OS 34 31 455 oder nach DE-OS 34 31 454 ausgeführt sein.

## Patentansprüche

1. Einrichtung zur Überwachung von elektronischen Schaltungen oder von Bauelementen (1), die einen Ruhestrom aufweisen, auf Funktionstüchtigkeit, **dadurch gekennzeichnet**, daß zumindest in einem Außenleiteranschluß (2) der Schaltung bzw. des Bauelements ein Stromsensor (3) eingeschaltet ist, der mit einer Auswertungsschaltung (4; Auswertungseinheit 8) verbunden ist, die auf Unterschreiten eines unterhalb des normalen Ruhestroms angesetzten Schwellenwerts ein Auswertungssignal abgibt, das an einem Ausgang (13 bzw. 16) als Meldesignal zur Verfügung steht, wobei die zu überwachenden Außenleiteranschlüsse (2) jeweils durch einen Ringkern aus magnetisch leitendem Material (Ringkernwandler 31) hindurchgeführt sind und jeweils eine Sekundärwicklung (30) des Ringkerns mit der Auswertungsschaltung (4) verbunden ist, in der eine Schaltung für eine logische Verknüpfung (14) angeordnet ist.

2. Einrichtung nach Anspruch 1 zur Überwachung mehrerer elektronischer Schaltungen oder mehrerer Bauelemente, **dadurch gekennzeichnet**, daß zwischen den Stromsensoren (3) und dem Ausgang (13) für das Meldesignal die Schaltung für die logische Verknüpfung (14) eingeschaltet ist.

3. Einrichtung nach Anspruch 1, **dadurch gekennzeichnet**, daß bei einem zu überwachenden Außenleiteranschluß (2) dieser durch einen Ringkern aus magnetisch leitendem Material (Ringkernwandler 31) hindurchgeführt ist, daß eine Sekundärwicklung (30) des Ringkerns einerseits mit der Auswertungsschaltung (4) verbunden ist und daß diese oder eine weitere Sekundärwicklung (30) mit einer Abschalteinrichtung verbunden ist, die auf Überschreiten eines Schwellwertes oberhalb des normalen Ruhestroms anspricht.

4. Verwendung einer Einrichtung nach Anspruch 2 zur Überwachung von Überspannungsableitern auf Unterbrechen des Strompfades infolge Defektes.

## Claims

1. Device for monitoring for functional reliability electronic circuit arrangements or components (1) having a quiescent current, characterised in that a current sensor (3) is connected into at least one outer conductor terminal (2) of the circuit arrangement or the component, which current sensor (3) is connected to an evaluation circuit arrangement (4; evaluation unit 8) which in response to an instance of falling below a threshold value set below the normal quiescent current emits an evaluation signal which is available as a status signal at an output (13 and 16 respectively), with the outer conductor terminals (2), which are to be monitored, each being guided through an annular core of magnetically conductive material (annular core transformer 31) and with a respective secondary winding (30) of the annular core being connected to the evaluation circuit arrangement (4) in which a circuit arrangement is arranged for a logic operation (14).

2. Device according to claim 1 for monitoring several electronic circuit arrangements or several components, characterised in that the circuit arrangement for the logic operation (14) is connected between the current sensors (3) and the output (13) for the status signal.

3. Device according to claim 1, characterised in that given an outer conductor terminal (2) that is to be monitored, the latter is guided through an annular core of magnetically conductive material (annular core transformer 31), in that a secondary winding (30) of the annular core is connected, on the one side, with the evaluation circuit arrangement (4) and in that the latter or a further secondary winding (30) is connected with a cut-off device which responds to instances of exceeding a threshold value above the normal quiescent current.

4. Use of a device according to claim 2 for monitoring surge diverters for interruption of the current path as a result of a defect.

## Revendications

1. Dispositif pour contrôler l'aptitude au fonctionnement de circuits électroniques ou de composants (1), qui présentent un courant de repos, caractérisé par le fait qu'au moins à une borne (2) du conducteur extérieur du circuit ou du composant est raccordé un détecteur d'intensité (3), qui est raccordé à un circuit d'évaluation (4; unité d'évaluation 8), qui, lorsque le courant de repos tombe au-dessous d'une valeur de seuil inférieure au courant de repos normal, délivre un signal d'évaluation qui est disponible en tant que signal de signalisation au niveau d'une sortie (13 ou 16), les bornes à contrôler (2) du conducteur extérieur traversant respectivement un noyau annulaire formé d'un matériau conducteur (transducteur à noyau annulaire 31), tandis que respectivement un enroulement secondaire (3) du noyau annulaire est relié au circuit d'évaluation (4) dans lequel est dispose un circuit (14) servant à réaliser une combinaison logique.

2. Dispositif suivant la revendication 1 pour contrôler plusieurs circuits électroniques ou plusieurs composants, caractérisé par le fait que le circuit (14) servant à réaliser la combinaison logique est branché entre les détecteurs d'intensité (3) et la sortie (13) du signal de signalisation.

3. Dispositif suivant la revendication 1, caractérisé par le fait que dans le cas d'une borne (2) à contrôler d'un conducteur extérieur, cette borne traverse un noyau annulaire réalisé en un matériau magnétiquement conducteur (transducteur à noyau annulaire 31), qu'un enroulement secondaire (30) du noyau annulaire est connecté, pour sa part, au circuit d'évaluation (4) et que ce dernier ou un autre enroulement secondaire (30) est raccordé à un dispositif de débranchement qui répond, lors du dépassement, par valeurs supérieures, d'une valeur de seuil supérieure au courant de repos normal.

4. Utilisation d'un dispositif selon la revendication 2 pour contrôler, des dispositifs de dérivation des surtensions quant à la coupure de la voie de passage du courant, qui serait dûe à la présence d'un défaut.
